# EUROPEAN PATENT SPECIFICATION

(11) **EP 1 753 190 B1**
(45) Date of publication and mention of the grant of the patent: **05.10.2011**
(21) Application number: 06011126.7
(22) Date of filing: 30.05.2006
(51) Int. Cl.: H04L 12/66, H04L 12/28, H04L 12/56, H04L 12/417

(54) **Method and system for USB re-direct over a network**
Verfahren und Vorrichtung zum USB-Weitersenden über ein Netzwerk
Procédé et dispositif pour la re-direction USB sur un réseau

(30) Priority: 08.07.2005 US 697634; 03.05.2006 US 416900
(43) Date of publication of application: 14.02.2007
(73) Proprietor: Broadcom Corporation, Irvine, CA 92617 (US)
(72) Inventor: Kumar, Sasi K., 92630 Lake Forest, CA (US); Hong, Ming Tzuming, Irvine, California 92618-7013 (US)
(74) Representative: Jehle, Volker Armin

(56) References cited:
- HIROFUCHI T ET AL: "USB/IP - a Peripheral Bus Extension for Device Sharing over IP Network" PROCEEDINGS OF THE USENIX ANNUAL TECHNICAL CONFERENCE, XX, XX, April 2005 (2005-04), pages 47-60, XP007901448
- WILSON YONG HONG WANG ET AL: "AN ETHERNET BASED DATA STORAGE PROTOCOL FOR HOME NETWORK" IEEE TRANSACTIONS ON CONSUMER ELECTRONICS, IEEE SERVICE CENTER, NEW YORK, NY, US, vol. 50, no. 2, May 2004 (2004-05), pages 543-551, XP001224965 ISSN: 0098-3063

## Description

### FIELD OF THE INVENTION

Certain embodiments of the invention relate to network interfaces. More specifically, certain embodiments of the invention relate to a method and system for universal serial bus (USB) re-direct (USB-R) over a network.

### BACKGROUND OF THE INVENTION

The Universal Serial Bus was originally developed in 1995 by a consortium of companies. The major goal of USB was to define an external expansion bus, which makes adding peripherals to a PC as easy as hooking up a telephone to a wall-jack. The ease-of-use and low cost made USB successful in the marketplace, with most peripheral vendors around the globe developing products to its specification.

One role of system software is to provide a uniform view of the system for all applications software. The system software may be adapted to hide hardware implementation details so that application software is more portable. The system software may manage the dynamic attach and detach of peripherals. This phase, called enumeration, involves communicating with the peripheral to discover the identity of a device driver that it should load, if not already loaded. A unique address is assigned to each peripheral during enumeration to be used for run-time data transfers. During run-time the host PC initiates transactions to specific peripherals, and each peripheral accepts its transactions and responds accordingly. Additionally, the host PC software incorporates the peripheral into the system power management scheme and may manage overall system power without user interaction.

The hub may provide additional connectivity for USB peripherals and managed power to attached peripherals. The hub may recognize dynamic attachment of a peripheral and provide device power for peripheral operation. A newly attached hub may be assigned its unique address, and hubs may be cascaded up to five levels deep, for example. During run-time a hub may operate as a bi-directional repeater and may repeat USB signals as required on upstream cables towards the host and downstream cables towards the device.

The USB peripherals may be adapted to request transactions sent from the host PC. The peripheral may respond to control transactions that, for example, request detailed information about the device and its configuration. The peripheral may transmit and receive data to/from the host using a standard USB data format. This standardized data movement to/from the PC host and interpretation by the peripheral gives USB enormous flexibility with little PC host software changes. The USB 1.1 peripherals may operate at 12 Mb/s or 1.5 Mb/s.

USB 2.0 is an evolution of the USB 1.1 specification, providing a higher performance interface. The USB 1.1 connectors and full-speed cables may support the higher speeds of USB 2.0 without any changes. The higher transmission speed may be negotiated on a device-by-device basis and if the higher speed is not supported by a peripheral, then the link operates at a lower speed of 12 Mb/s or 1.5 Mb/s as determined by the peripheral. The external USB 2.0 hub may have different signaling rates on its ports. Using a 40x multiplier for USB 2.0, the USB 2.0 hub may have an input rate of 480 Mb/s and output rates of 480 Mb/s, for example, for attached high speed USB 2.0 peripherals, and 12 Mb/s or 1.5 Mb/s, for example, for attached USB 1.1 peripherals. The USB 2.0 hub may match the data rates sent out of its downstream ports to the data rate appropriate to the attached device. The higher data rate of USB 2.0 may open up the possibilities of new peripherals, for example, video-conferencing cameras may perform better with access to higher bandwidth.

The system software may comprehend the increased capabilities of USB 2.0 peripherals so that it can optimize performance and detect sub-optimal configurations, for example, a USB 2.0 peripheral attached to a USB 1.1 hub, and recommends a better configuration for attaching the peripherals. A USB 2.0 hub may be adapted to accept high-speed transactions at the faster frame rate and deliver them to high-speed USB 2.0 peripherals and USB 1.1 peripherals. This data rate matching responsibility may require increased hub complexity and temporary buffering of the incoming high-speed data. In the case of communicating with an attached USB 2.0 peripheral, the hub repeats the high speed signals on appropriate USB 2.0 upstream and downstream cables. This allows USB 2.0 peripherals to utilize the majority of USB 2.0 bandwidth.

To communicate with USB 1.1 peripherals, a USB 2.0 hub may comprise a mechanism that supports the concept of matching the data rate with the capabilities of the downstream device. The hub may be adapted to manage the transition of the data rate from the high speed of the host controller to the lower speed of a USB 1.1 device.

A USB device may be serviced by a local USB host controller and appropriate host software to configure, operate, monitor and manage the USB devices. However, in order to enable a host with limited local intelligence to support some USB devices, the USB processing may be executed in a remote location based on a local entity sending the signals to that remote location. For example, in a client/server setup, where the client is a smart terminal with limited local processing but would like to offer the flexibility of supporting peripherals, for example, USB 1.1 peripherals such as keyboard, mouse and printer.

Further limitations and disadvantages of conventional and traditional approaches will become apparent to one of skill in the art, through comparison of such systems with some aspects of the present invention as set forth in the remainder of the present application with reference to the drawings.

HIROFUCHI T ET AL: "USB/IP - a Peripheral Bus Extension for Device Sharing over IP Network", PROCEEDINGS OF THE USENIX ANNUAL TECHNICAL CONFERENCE, April 2005, proposes USB/IP as a peripheral bus extension which allows a computer to extend its local peripheral buses over an IP network to another computer.

### BRIEF SUMMARY OF THE INVENTION

A system and/or method is provided for universal serial bus (USB) re-direct (USB-R) over a network, substantially as shown in and/or described in connection with at least one of the figures, as set forth more completely in the claims.
The invention is defined in the independent claims. Further embodiments are defined in the dependent claims.
According to an aspect of the invention, a method for communicating via a bus interface in a network is provided, the method comprising:
receiving at a local client device via a network, remote client device detection data corresponding to a remote client device that is plugged into a remote system;
requesting by said local client device, access to said remote client device that is plugged into said remote system; and
mapping said remote client device that is plugged into said remote system as a USB device at said local client device.
Advantageously, the method further comprises exporting said received remote client device detection data corresponding to said remote client device that is plugged into said remote system to an operating system located at said local client device.
Advantageously, the method further comprises detecting said remote client device that is plugged into said remote system at said local client device based on said exporting.
Advantageously, the method further comprises requesting by said local client device, access to said remote client device that is plugged into said remote system by communicating device access data to said remote system via said network.
Advantageously, the method further comprises encoding said communicated device access data to said remote system via said network.
Advantageously, the method further comprises translating at said local client device, said remote client device detection data corresponding to said remote client device that is plugged into said remote system to corresponding USB device detection events.
Advantageously, the method further comprises representing said remote client device that is plugged into said remote system as said USB device at said local client device.
Advantageously, the method further comprises receiving at said local client device, information from said remote system via said network, confirming said requested access to said remote client device that is plugged into said remote system.
Advantageously, said remote client device is a remote USB client device.
Advantageously, said remote client device is a remote non-USB client device.
According to an aspect of the invention, a machine-readable storage is provided having stored thereon, a computer program having at least one code section for communicating via a bus interface in a network, the at least one code section being executable by a machine for causing the machine to perform steps comprising:
receiving at a local client device via a network, remote client device detection data corresponding to a remote client device that is plugged into a remote system;
requesting by said local client device, access to said remote client device that is plugged into said remote system; and
mapping said remote client device that is plugged into said remote system as a USB device at said local client device.
Advantageously, the machine-readable storage further comprises code for exporting said received remote client device detection data corresponding to said remote client device that is plugged into said remote system to an operating system located at said local client device.
Advantageously, the machine-readable storage further comprises code for detecting said remote client device that is plugged into said remote system at said local client device based on said exporting.
Advantageously, the machine-readable storage further comprises code for requesting by said local client device, access to said remote client device that is plugged into said remote system by communicating device access data to said remote system via said network.
Advantageously, the machine-readable storage further comprises code for encoding said communicated device access data to said remote system via said network.
Advantageously, the machine-readable storage further comprises code for translating at said local client device, said remote client device detection data corresponding to said remote client device that is plugged into said remote system to corresponding USB device detection events.
Advantageously, the machine-readable storage further comprises code for representing said remote client device that is plugged into said remote system as said USB device at said local client device.
Advantageously, the machine-readable storage further comprises code for receiving at said local client device, information from said remote system via said network, confirming said requested access to said remote client device that is plugged into said remote system.
Advantageously, said remote client device is a remote USB client device.
Advantageously, said remote client device is a remote non-USB client device.
According to an aspect of the invention, a system for communicating via a bus interface in a network is provided, the system comprising:
a processor that enables receiving at a local client device via a network, remote client device detection data corresponding to a remote client device that is plugged into a remote system;
said processor enables requesting by said local client device, access to said remote client device that is plugged into said remote system; and
said processor enables mapping of said remote client device that is plugged into said remote system as a USB device at said local client device.
Advantageously, said processor enables export of said received remote client device detection data corresponding to said remote client device that is plugged into said remote system to an operating system located at said local client device.
Advantageously, said processor enables detection of said remote client device that is plugged into said remote system at said local client device based on said exporting.
Advantageously, said processor enables requesting of access to said remote client device that is plugged into said remote system by communicating device access data to said remote system via said network.
Advantageously, said processor enables encoding of said communicated device access data to said remote system via said network.
Advantageously, said processor enables translation at said local client device, said remote client device detection data corresponding to said remote client device that is plugged into said remote system to corresponding USB device detection events.
Advantageously, said processor enables representation of said remote client device that is plugged into said remote system as said USB device at said local client device.
Advantageously, said processor enables receiving at said local client device, information from said remote system via said network, confirming said requested access to said remote client device that is plugged into said remote system.
Advantageously, said remote client device is a remote USB client device.
Advantageously, said remote client device is a remote non-USB client device.
Advantageously, said processor at said local client device is a network interface controller.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating driver and controller interfaces for a USB subsystem that may be utilized in connection with an embodiment of the invention.

FIG. 2 is a block diagram illustrating a USB redirect connection between a local system and a remote system, in accordance with an embodiment of the invention.

FIG. 3 is a block diagram illustrating an exemplary architecture of a client PC implementing USB redirect, in accordance with an embodiment of the invention.

FIG. 4 is a block diagram of a single computer USB system with a USB 2.0 hub that may be utilized in connection with an embodiment of the invention.

FIG. 5a is a flowchart illustrating exemplary steps involved in locating and identifying a USB device plugged into a remote client, in accordance with an embodiment of the invention.

FIG. 5b is a flowchart illustrating exemplary steps involved in locating and identifying a non-USB device plugged into a remote client, in accordance with an embodiment of the invention.

FIG. 6 is a flowchart illustrating exemplary steps involved in accessing a device plugged into a remote client, in accordance with an embodiment of the invention.

### DETAILED DESCRIPTION OF THE INVENTION

Certain aspects of a method and system for universal serial bus (USB) re-direct (USB-R) over a network may comprise receiving at a local client device via a network, remote client device detection data corresponding to a remote client device that is plugged into a remote system. The local client device may request access to the remote client device that is plugged into the remote system by communicating device access data. The remote client device that is plugged into the remote system may be mapped as a USB device at the local client device. The local client device may receive information from the remote system via the network, confirming the requested access to the remote client device that is plugged into the remote system.

The USB redirect may eliminate the need of physically plugging in of a USB device on a local system as any type of USB device may be made available to the local system while the actual device may be located remotely. The USB functions may be mapped via software and dissimilar devices may be simulated, for example, on a local system, the plugged in device may appear to be a USB memory stick but the storage content may be mapped to a file or directory on a remote system. When mapped to the local system, the device may appear as if a user just plugged a new USB device. When mapping terminates, the device may appear as if user just unplugged the USB device. The diversity of the remote system services and location of the system become flexible as the mapping and USB function re-direction are performed over a local area network.

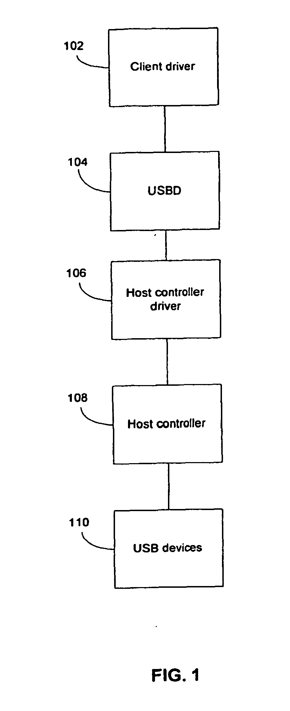

FIG. 1 is a block diagram illustrating driver and controller interfaces for a USB subsystem that may be utilized in connection with an embodiment of the invention. Referring to FIG. 1, there is shown a client driver 102, a USB driver (USBD) 104, a host controller driver (HCD) 106, a host controller hardware block 108 and a USB devices block 110.

The client driver 102 may comprise suitable logic, circuitry and/or code that may enable management of the attached USB devices via the USBD 104. The USBD 104 may comprise suitable logic and/or code that may enable data exchange between a host computer and the attached USB peripheral devices. The attached peripheral devices may share the USB bandwidth through a host-scheduled, token-based protocol. The HCD 106 may provide an abstraction for data transfers by the host controller 108 across the USB interconnect. The HCD 106 may be adapted to provide an abstraction for allocation and de-allocation of host controller 108 resources to support guaranteed services to USB devices 110. The HCD 106 may provide a software interface that implements the required abstractions. The HCD 106 may be the lowest tier in a software stack with one client, universal serial bus driver (USBD).

The USBD may enable mapping of requests from a plurality of clients to the appropriate HCD that in turn may manage many host controllers. The host controller 108 may comprise suitable logic, circuitry and/or code that may provide a high-speed bus interface to and from main system memory. The host controller 108 may inform the USB system when the data buffers need to be filled or emptied. The USB devices block 110 may comprise a plurality of USB devices, for example, a flash storage device, a webcam, a digital camera, a modem, a printer, a scanner, a mouse, a keyboard, or a telephone.

When the USB device 110 is attached, a hub driver receives a notification from the hub detecting the change. The hub driver, using the information provided by the hub, requests a device identifier from the USBD. The USBD in turn may return a device identifier to the hub driver. For each USB device 110, a plurality of configurations may be required before the device is ready to use. The device configuration may include setting up the device's USB parameters and allocating USB host resources that are visible to the device. The configuring software may read the device descriptor and request the description of each possible configuration. This information may be used to load a particular client, such as a device driver, which initially interacts with the device and may choose a configuration for the device. The device configuration may setup the endpoints on the device and return a collection of interfaces to be used for data transfer by USBD clients. The initial configuration may use the default settings for interfaces and the default bandwidth for each endpoint. A USBD implementation may additionally allow the client to specify the interfaces when selecting the initial configuration. The USB system may verify that the resources required for the support of the endpoint are available and accordingly allocate the bandwidth required.

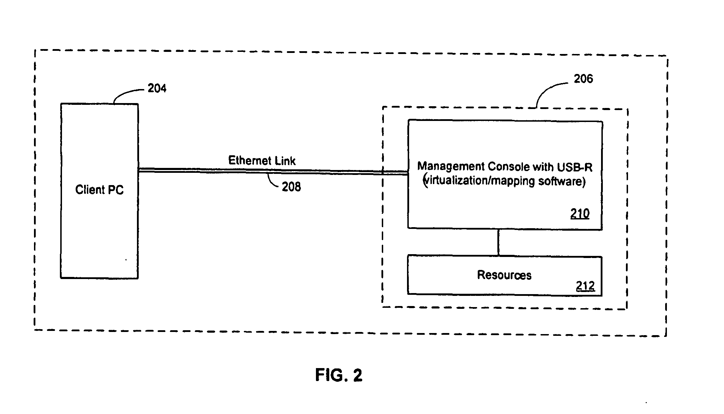

FIG. 2 is a block diagram illustrating a USB redirect connection between a local system and a remote system, in accordance with an embodiment of the invention. Referring to FIG. 2, there is shown a client PC 204, a remote PC 206, and an Ethernet link 208 coupling the client PC 204 and the remote PC 206. The remote PC 206 may comprise a management console 210 and a resources block 212.

The client PC 204 may comprise suitable logic, circuitry and/or code that may be adapted to request information or applications from a server. The client PC 204 may comprise firmware and/or other code that may map a USB device plugged into the remote PC 206 to the client PC 204 via a communication protocol, for example, Ethernet, which is utilized by the Ethernet link 208. The management console 210 may comprise USB redirect virtualization and mapping software to map a USB device plugged into the remote PC 206 to the client PC 204 via a communication protocol, for example, Ethernet link 208. The resources block 212 may comprise physical USB devices and/or software mapped pseudo resources that may be mapped to the client PC 204 via a communication protocol, for example, Ethernet link 208.

The remote USB-R virtualization and mapping software or other code may provide creation of device mapping, termination of device mapping, and transmission and reception of virtualized USB-R command and data over the network. The remote USB-R virtualization and mapping software or other code may also provide USB device virtualization that interprets USB command and data from the USB-R to the mapped device or data. In one embodiment of the invention, due to inter-dependencies of the USB-R hardware, the USB-R firmware or other code and the network interface controller (NIC), these components may be integrated as one single chip, which reduces costs and offers a better integrated solution. A system with an integrated USB-R device installed may be capable of having a wide variety of additional USB devices, based on the mapping that occurs on the USB-R virtualization software.

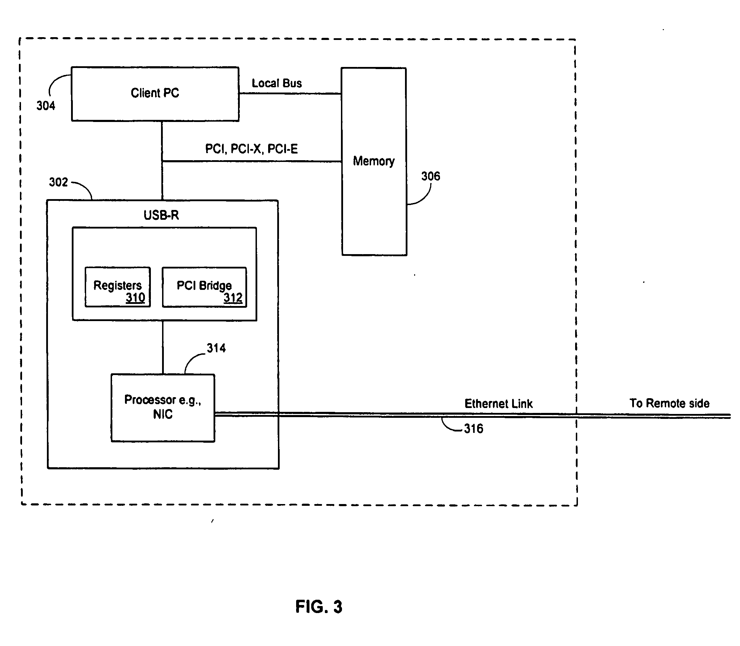

FIG. 3 is a block diagram illustrating an exemplary architecture of a client implementing USB redirect, in accordance with an embodiment of the invention. Referring to FIG. 3, there is shown a client PC 304, a memory block 306, a USB redirect subsystem 302 and an Ethernet link 316. The USB redirect subsystem 302 may comprise registers 310, a peripheral component interconnect (PCI) bridge 312, and a processor, which may be referred to as a network interface controller (NIC) 314.

The client PC 304 may comprise suitable logic, circuitry and/or code that may request information or applications from a server. The client PC 304 may enable mapping of a USB device plugged into a remote PC to the client PC 304 via a communication protocol, for example, Ethernet link 316. The client PC 304 may store data and access stored data from the memory block 306 via a PCI bus or a local bus. The USB redirect subsystem 302 may comprise USB redirect virtualization and mapping software to map a USB device plugged into a remote PC to the client PC 304 via a communication protocol, for example, Ethernet link 316. In one embodiment of the invention, due to inter-dependencies of the USB-R hardware, the USB-R firmware or other code and the network interface controller (NIC) 314, these components may be integrated as one single chip, which reduces costs and offers a better integrated solution. The registers 310 may comprise suitable logic, circuitry and/or code that may manage and/or interpret the data received from the USB devices plugged into the remote PC via the Ethernet link 316. The PCI bridge 312 may comprise suitable logic, circuitry and/or code that may interface the received data from the USB devices plugged into the remote PC to the client PC 304 and the memory 306 via the PCI, or PCI-extended bus. The NIC 314 may comprise suitable logic, circuitry and/or code that may receive the data from the USB devices plugged into the remote PC. The NIC 314 may serve multiple network attached devices, such as workstations and printers by receiving data from a transmitting workstation, encode the data into a specific packet format, for example, Ethernet packet format and communicate the received data to the registers 310 and the PCI bridge 312. The firmware component in the USB redirect (USB-R) subsystem 302 may be embedded inside the USB-R hardware and may monitor the USB-R hardware functions as well as network traffic and perform USB to Ethernet traffic translations between the USB-R hardware and the NIC 314.

The firmware in the USB redirect subsystem 302 and the NIC 314 may interpret data packets received from the remote PC via the Ethernet link 316. The received data packets may be communicated to either an open host controller interface (OHCI) if it is a USB 1.1 data packet or to an extended host controller interface (EHCI) if it is a high-speed USB 2.0 data packet. On the remote PC side, the OHCI and EHCI functions may be simulated in software that may be adapted to receive the device access information from the plugged in USB devices and transfer the received data to the NIC 314 on the local client side via the Ethernet link 316.

The USB redirect subsystem 302 may be adapted to implement a partial USB host controller, which may appear like a PCI based host controller to the client PC 304 and the operating system (OS). The host controller register and memory interface structure may be maintained without any significant changes. Instead of serializing the data over USB, the data may be sent and received over the LAN in an encoded format through the Ethernet link 316 and as a result, the USB bus timing may not be affected. In one exemplary embodiment of the invention, the data transfer errors may be handled by OS or BIOS level timeouts. In an embodiment of the invention, there may not be a limitation on the number of USB devices plugged in on the remote PC based on their power consumption requirements, as the devices plugged into the remote system may be mapped as virtual devices at the local client system.

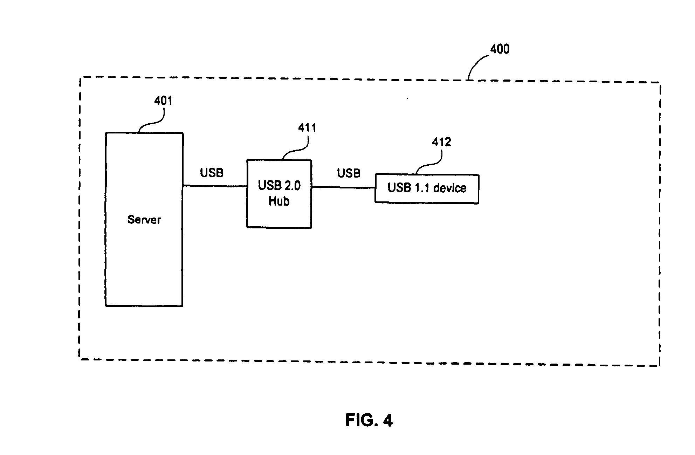

FIG. 4 is a block diagram of a single computer USB system with a USB 2.0 hub that may be utilized in connection with an embodiment of the invention. Referring to FIG. 4, there is shown a server 401, a USB 2.0 hub 411 and a USB 1.1 device 412. The server 401 may comprise suitable logic, circuitry and/or code that may handle various kinds of requests from a client, for example, printing, or controlling access to voice mail, electronic mail and facsimile services. The server 401 may also handle large amounts of data. The USB 2.0 hub 411 may comprise suitable logic, circuitry and/or code that may increase the number of USB ports on a personal computer (PC). The USB 1.1 device block 412 may be, for example, a flash storage device, a webcam, a digital camera, a modem, a printer, a scanner, a mouse, a keyboard, or a telephone.

The USB system 400 may be adapted to connect several USB devices 412 to a host controller on the server 401 through a chain of USB 2.0 hubs 411. The USB devices and hubs have associated pipes or logical channels, which are connections from the host controller on the server 401 to a logical entity on the device named an endpoint.

Each endpoint may transfer data in one direction, either into or out of the device, so each pipe is uni-directional. All USB devices have at least two such pipes/endpoints, namely endpoint 0 which is used to control the device on the bus. There is an inward and an outward pipe numbered 0 on each device. The pipes may be divided into four different categories by way of their transfer type, for example, control transfers, isochronous transfers, interrupt transfers and bulk transfers. The control transfers may be used for short, simple commands to the device, and a status response by the bus control pipe number 0. The isochronous transfers may be used at some guaranteed speed but with possible data loss, for example, realtime audio or video. The interrupt transfers may be used for devices that need guaranteed quick responses or bounded latency, for example, pointing devices and keyboards. The bulk transfers may be used for large sporadic transfers using all remaining available bandwidth but with no guarantees on bandwidth or latency, for example, file transfers.

When a USB 1.1 device 412 is attached to the host controller on the server 401 through a hub 411 on the bus, it is given a unique 7-bit address on the bus by the host controller. The host controller then polls the bus for traffic, usually in a round-robin fashion, so no device can transfer any data on the bus without explicit request from the host controller.

The USB device 412 connected to the bus has one device descriptor, which in turn has one or more configuration descriptors. Each configuration descriptor in turn has one or more interface descriptors, which describe certain aspects of the device, so that it may be used for different purposes, for example, a camera may have both audio and video interfaces. These interface descriptors in turn have one default interface setting and possibly more alternate interface settings which in turn have endpoint descriptors. An endpoint may be reused among several interfaces and alternate interface settings.

The hi-speed devices may fall back to the slower data rate of full speed when plugged into a full speed hub. The hi-speed hubs may have a special function called the transaction translator that segregates full speed and low speed bus traffic from hi-hpeed traffic. The transaction translator in a hi-speed hub may function as a completely separate full speed bus to full speed and low speed devices attached to it.

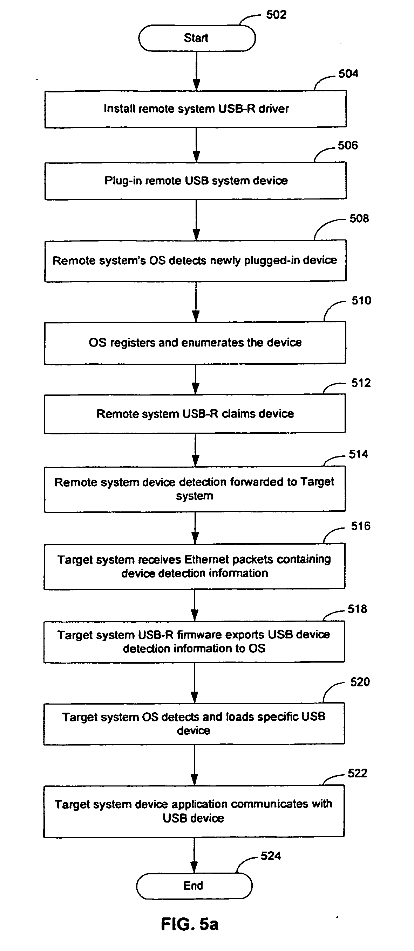

FIG. 5a is a flowchart illustrating exemplary steps involved in locating and identifying a USB device plugged into a remote client, in accordance with an embodiment of the invention. Referring to FIG. 5a, the exemplary steps may begin at step 502. In step 504, the remote PC USB redirect device driver may be installed on the remote PC. In step 506, a USB device may be plugged into the remote PC. In step 508, the operating system of the remote PC may detect the newly plugged in USB device. In an embodiment of the invention, a device driver at the remote PC may detect the newly plugged in USB device and report it to the operating system of the remote PC. In step 510, the newly plugged in USB device may be registered and enumerated by the operating system in the remote PC. For example, for a plurality of newly plugged-in USB devices, each of them may be registered and enumerated separately to enable detection by the client PC. In step 512, the USB redirect subsystem in the remote PC may claim the newly plugged in USB device. In step 514, the device detection information of the newly plugged in USB device may be communicated to the target system via an Ethernet link, for example. In step 516, the target system may receive the Ethernet packets comprising device detection information from the remote PC. In step 518, the target system's USB redirect firmware may export the device detection information of the newly plugged in USB device to the operating system on the target system. In step 520, the operating system on the target system may detect the newly plugged in USB device and load the specific device driver. In step 522, the device application on the target system may communicate with the newly plugged in USB device on the remote PC. Control then passes to end step 524.

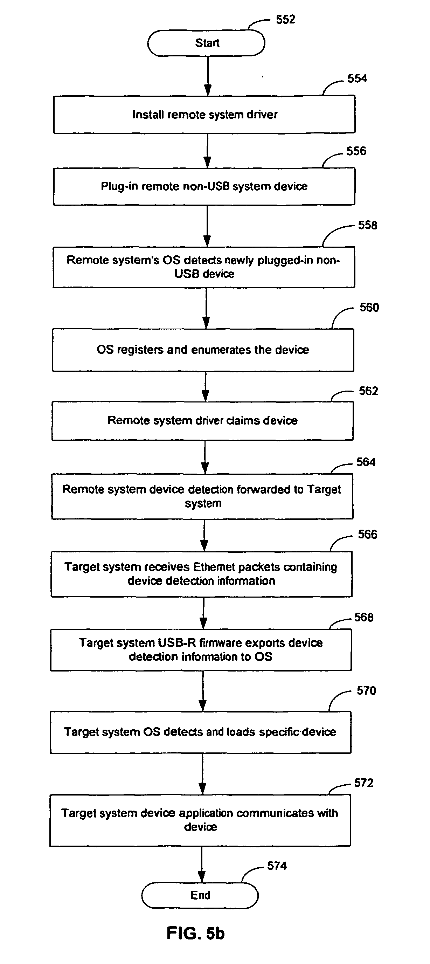

FIG. 5b is a flowchart illustrating exemplary steps involved in locating and identifying a non-USB device plugged into a remote client, in accordance with an embodiment of the invention. Referring to FIG. 5b, the exemplary steps may begin at step 552. In step 554, a remote PC device driver may be installed on the remote PC. In step 556, a non-USB device may be plugged into the remote PC, for example, a serial advanced technology attachment (SATA) that may boost the performance of a network attached storage (NAS), a redundant array of independent disks (RAID), a small computer system interface (SCSI) devices, IEEE 1394 Firewire compliant devices, PCI devices, PCI Express devices. In step 558, the operating system of the remote PC may detect the newly plugged in non-USB device. In an embodiment of the invention, a device driver at the remote PC may detect the newly plugged in non-USB device and report it to the operating system of the remote PC. In step 560, the newly plugged in non-USB device may be registered and enumerated by the operating system in the remote PC. For example, for a plurality of newly plugged-in non-USB devices, each of them may be registered and enumerated separately to enable detection by the client PC. In step 562, the USB redirect subsystem in the remote PC may claim the newly plugged in non-USB device. In step 564, the device detection information of the newly plugged in USB device may be communicated to the target system via an Ethernet link, for example. In step 566, the target system may receive the Ethernet packets comprising device detection information from the remote PC. In step 568, the target system's USB redirect firmware may export the device detection information of the newly plugged in non-USB device to the operating system on the target system. In step 570, the operating system on the target system may detect the newly plugged in non-USB device and load the specific device driver. The newly plugged in non-USB device on the remote PC may be mapped to the client PC and may appear as a USB device on the client PC. In step 572, the device application on the target system may communicate with the newly plugged in non-USB device on the remote PC. Control then passes to end step 574.

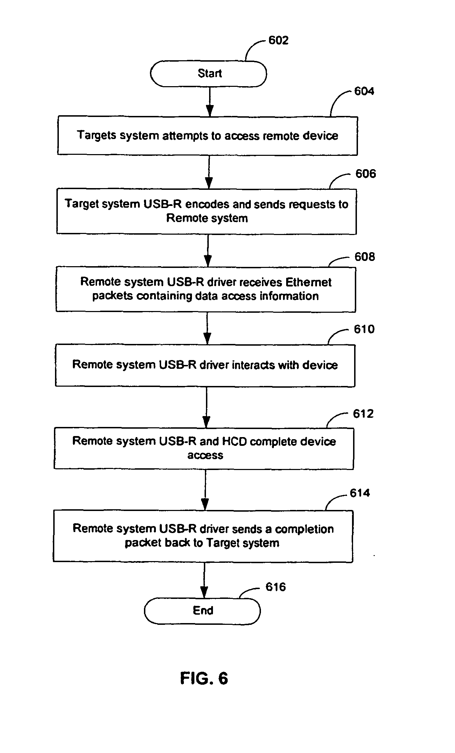

FIG. 6 is a flowchart illustrating exemplary steps involved in accessing a device plugged into a remote client, in accordance with an embodiment of the invention. Referring to FIG. 6, exemplary steps may begin at step 602. In step 604, the target system attempts to access the newly plugged in USB device on the remote PC, for example, for a read and/or write operation. In step 606, the USB redirect subsystem on the target system encodes and transmits requests to the remote PC to access the newly plugged in USB device on the remote PC. In step 608, the USB redirect subsystem's driver on the remote PC may receive the Ethernet packets comprising device access information from the target system. In step 610, the USB redirect subsystem's driver on the remote PC may interact with the device driver of the newly plugged in USB device on the remote PC. In step 612, the USB redirect subsystem and the host controller driver (HCD) on the remote PC may complete the device access of the newly plugged in USB device on the remote PC. In step 614, the USB redirect subsystem's driver on the remote PC may communicate a completion packet back to the target system indicating the completion of the device access phase. Control then passes to end step 616.

Another embodiment of the invention may provide a machine-readable storage, having stored thereon, a computer program having at least one code section executable by a machine, thereby causing the machine to perform the steps as described above for universal serial bus (USB) re-direct (USB-R) over a local area network (LAN).

In an embodiment of the invention, the USB redirect subsystem may provide transparent device access from a client system to a variety of resources that are attached at the remote system, via high speed Ethernet link between the client and remote systems. On the client system, these remote resources may appear as USB devices to the client system's operating system software. In this regard, a new type of USB device may be provided, which appears to a local system as a local USB device, but the USB functions may be located on a remote system over the network.

The actual device type, for example, a keyboard, mouse, storage or other USB device, may be dynamically configured via mapping software and a new USB device may appear on the local system. The USB redirect device may behave like any other local USB device, but the local system interactions may be re-directed to the mapped remote system over the network. When the USB-R mapping process is completed, a new USB device may appear to the local system under the USB root hub, where an additional host software device driver may be utilized for the USB device to become operational. The actions performed by the host software may be captured and interpreted by the USB-R firmware, formatted into a network packet and communicated over the network to the remote system with the USB-R virtualization software. The USB-R virtualization software comprises a user interface, which allows a user to select a target NIC, map a local resource to the remote system's USB-R and decide what USB device type may appear on the target system. In addition, the USB-R virtualization software may interpret the command and data arrived from the target USB-R device, and virtualize the command and data to the mapped resources.

Certain aspects of a method and system for communicating via a bus interface in a network may comprise a processor, for example, a network interface controller (NIC) 314 for receiving at a local client device via a network, for example, Ethernet utilized by the Ethernet link 316, remote client device detection data corresponding to a remote client device, for example, resources block 212 comprising physical USB and non-USB devices, that is plugged into a remote system, for example, remote PC 206. The NIC 314 may request access to the remote client device that is plugged into the remote PC 206. The NIC 314 may map the remote client device that is plugged into remote PC 206 as a USB device at the local client device, for example, client PC 204.

The NIC 314 may enable export of the received remote client device detection data corresponding to the remote client device that is plugged into the remote PC 206 to an operating system located at the local client PC 304. The NIC 314 may enable detection of the remote client device that is plugged into the remote PC 206 at the local client device based on the exporting of the received remote client device detection data. The NIC 314 may request access to the remote client device that is plugged into the remote PC 206 by communicating device access data to the remote PC 206 via the network, for example, Ethernet link 316. The NIC 314 may encode the communicated device access data to the remote PC 206 via the network, for example, Ethernet link 316. The NIC 314 may enable translation at the local client PC 304, the remote client device detection data corresponding to the remote client device that is plugged into the remote PC 206 to corresponding USB device detection events. The NIC 314 may enable representation of the remote client device that is plugged into the remote PC 206 as a USB device at the local client PC 304. The NIC 314 may receive at the local client PC 204, information from the remote PC 206 via the network, for example, Ethernet link 316 confirming the requested access to the remote client device that is plugged into the remote PC 206. The remote client device may be a remote USB client device. The remote client device may be a remote non-USB client device, for example, a serial advanced technology attachment (SATA) that may boost the performance of a network attached storage (NAS), a redundant array of independent disks (RAID), a small computer system interface (SCSI) devices, IEEE 1394 Firewire compliant devices, PCI devices, PCI Express devices.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communicating via a bus interface in a network (208, 316), the method comprising:
receiving at a local client device (102, 204, 304, 411) via a network (208, 316),
remote client device detection data corresponding to a remote client device that is plugged into a remote system (206, 400);
requesting by said local client device (102, 204, 304, 411), access to said remote client device that is plugged into said remote system (206, 400) by communicating device access data to said remote system (206, 400) via said network (208, 316);
mapping said remote client device that is plugged into said remote system (206, 400) as a USB device at said local client device (102, 204, 304, 411);
encoding said device access data communicated to said remote system (206, 400) via said network (208, 316);
receiving at said local client device (102, 204, 304, 411), information from said remote system (206, 400) via said network (208, 316), confirming said requested access to said remote client device that is plugged into said remote system (206, 400); **characterised by**
exporting said received remote client device detection data corresponding to said remote client device that is plugged into said remote system (206, 400) to an operating system located at said local client device (102, 204, 304, 411);
and
detecting said remote client device that is plugged into said remote system (206, 400) at said local client device (102, 204, 304, 411) based on said exporting.

2. The method according to claim 1, further comprising translating at said local client device (102, 204, 304, 411), said remote client device detection data corresponding to said remote client device that is plugged into said remote system (206, 400) to corresponding USB device detection events.

3. The method according to claim 1, further comprising representing said remote client device that is plugged into said remote system (206, 400) as said USB device at said local client device (102, 204, 304, 411).

4. The method according to claim 1, wherein said remote client device is a remote USB client device or a remote non-USB client device.

5. A machine-readable storage having stored thereon, a computer program having at least one code section for communicating via a bus interface in a network (208, 316), the at least one code section being executable by a local client device (102, 204, 304, 411) for causing the local client device (102, 204, 304, 411) to perform steps comprising:
receiving at a local client device (102, 204, 304, 411) via a network (208, 316),
remote client device detection data corresponding to a remote client device that is plugged into a remote system (206, 400);
requesting by said local client device (102, 204, 304, 411), access to said remote client device that is plugged into said remote system (206, 400) by communicating device access data to said remote system (206, 400) via said network (208, 316);
mapping said remote client device that is plugged into said remote system (206, 400) as a USB device at said local client device (102, 204, 304, 411);
encoding said device access data communicated to said remote system (206, 400) via said network (208, 316);
receiving at said local client device (102, 204, 304, 411), information from said remote system (206, 400) via said network (208, 316), confirming said requested access to said remote client device that is plugged into said remote system (206, 400);
**characterised in that** the steps comprise
exporting said received remote client device detection data corresponding to said remote client device that is plugged into said remote system (206, 400) to an operating system located at said local client device (102, 204, 304, 411);
and
detecting said remote client device that is plugged into said remote system (206, 400) at said local client device (102, 204, 304, 411) based on said exporting.

6. The machine-readable storage according to claim 5, further comprising code for translating at said local client device (102, 204, 304, 411), said remote client device detection data corresponding to said remote client device that is plugged into said remote system (206, 400) to corresponding USB device detection events.

7. The machine-readable storage according to claim 5, further comprising code for representing said remote client device that is plugged into said remote system (206, 400) as said USB device at said local client device (102, 204, 304, 411).

8. The machine-readable storage according to claim 5, wherein said remote client device is a remote USB client device or a remote non-USB client device.

9. A system for communicating via a bus interface for a network (208, 316), the system comprising a local client device having:
a processor (104, 314) adapted to receiving at a local client device (102, 204, 304, 411) via a network (208, 316), remote client device detection data corresponding to a remote client device (110, 212, 306, 412) that is plugged into a remote system (206, 400); wherein
said processor (104, 314) is adapted to requesting by said local client device (102, 204, 304, 411), access to said remote client device that is plugged into said remote system (206, 400) by communicating device access data to said remote system (206, 400) via said network (208, 316);
said processor (104, 314) is adapted to mapping of said remote client device that is plugged into said remote system (206, 400) as a USB device at said local client device (102, 204, 304, 411);
said processor (104, 314) is adapted for encoding of said device access data communicated to said remote system (206, 400) via said network (208, 316);
said processor (104, 314) is adapted for receiving at said local client device (102, 204, 304, 411), information from said remote system (206, 400) via said network (208, 316), confirming said requested access to said remote client device that is plugged into said remote system (206, 400); **characterised in that** said processor (104, 314) is adapted to export of said received remote client device detection data corresponding to said remote client device that is plugged into said remote system (206, 400) to an operating system located at said local client device; and
said processor (104, 314) is adapted for detection of said remote client device that is plugged into said remote system (206, 400) at said local client device (102, 204, 304, 411) based on said exporting.

10. The system according to claim 9, wherein said processor (104, 314) is adapted for translation at said local client device (102, 204, 304, 411), said remote client device detection data corresponding to said remote client device that is plugged into said remote system (206, 400) to corresponding USB device detection events.

11. The system according to claim 9, wherein said processor (104, 314) is adapted for representation of said remote client device that is plugged into said remote system (206, 400) as said USB device at said local client device (102, 204, 304, 411).

12. The system according to claim 9, wherein said remote client device is a remote USB client device or a remote non-USB client device.

## Patentansprüche

1. Verfahren zum Kommunizieren über eine Busschnittstelle in einem Netzwerk (208, 316), wobei das Verfahren umfasst:
Empfangen, an einer lokalen Client Vorrichtung (102, 204, 304, 411) über ein Netzwerk (208, 316), von fernen Client Vorrichtungs-Ermittlungsdaten entsprechend einer fernen Client Vorrichtung, die in ein fernes System (206, 400) eingesteckt ist;
Anfordern, durch die lokale Client Vorrichtung (102, 204, 304, 411), von Zugriff auf die ferne Client Vorrichtung, die in das ferne System (206, 400) eingesteckt ist, durch Kommunizieren von Vorrichtungszugriffsdaten an das ferne System (206, 400) über das Netzwerk (208, 316);
Abbilden der fernen Client Vorrichtung, die in das ferne System (206, 400) eingesteckt ist, als USB Vorrichtung an der lokalen Client Vorrichtung (102, 204, 304, 411);
Codieren der Vorrichtungszugriffsdaten, die an das ferne System (206, 400) über das Netzwerk (208, 316) übertragen worden sind;
Empfangen, an der lokalen Client Vorrichtung (102, 204, 304, 411), von Informationen von dem fernen System (206, 400) über das Netzwerk (208, 316), die den angeforderten Zugriff auf die ferne Client Vorrichtung, die in das ferne System (206, 400) eingesteckt ist, bestätigen;
**gekennzeichnet durch**
Exportieren der empfangenen fernen Client Vorrichtungsermittlungsdaten entsprechend der fernen Client Vorrichtung, die in das ferne System (206, 400) eingesteckt ist, an ein Betriebssystem, das sich an der lokalen Client Vorrichtung (102, 204, 304, 411) befindet; und
Ermitteln der fernen Client Vorrichtung, die in das ferne System (206, 400) eingesteckt ist, an der lokalen Client Vorrichtung (102, 204, 304, 411) basierend auf dem Exportieren.

2. Verfahren nach Anspruch 1, das des Weiteren das Umsetzen, an der lokalen Client Vorrichtung (102, 204, 304, 411), der fernen Client Vorrichtungsermittlungsdaten entsprechend der fernen Client Vorrichtung, die in das ferne System (206, 400) eingesteckt ist, in entsprechende USB Vorrichtungsermittlungsereignisse umfasst.

3. Verfahren nach Anspruch 1, das des Weiteren das Repräsentieren der fernen Client Vorrichtung, die in das ferne System (206, 400) eingesteckt ist, als USB Vorrichtung an der lokalen Client Vorrichtung (102, 204, 304, 411) umfasst.

4. Verfahren nach Anspruch 1, wobei die ferne Client Vorrichtung eine ferne USB Client Vorrichtung oder eine ferne Nicht-USB Client Vorrichtung ist.

5. Maschinenlesbarer Speicher, auf dem ein Computerprogramm mit wenigstens einem Codeabschnitt zum Kommunizieren über eine Busschnittstelle in einem Netzwerk (208, 316) gespeichert ist, wobei der wenigstens eine Codeabschnitt von einer lokalen Client Vorrichtung (102, 204, 304, 411) ausführbar ist, um zu veranlassen, dass die lokale Client Vorrichtung (102, 204, 304, 411) Schritte durchführt, die einschließen:
Empfangen, an einer lokalen Client Vorrichtung (102, 204, 304, 411) über ein Netzwerk (208, 316), von fernen Client Vorrichtungs-Ermittlungsdaten entsprechend einer fernen Client Vorrichtung, die in ein fernes System (206, 400) eingesteckt ist;
Anfordern, durch die lokale Client Vorrichtung (102, 204, 304, 411), von Zugriff auf die ferne Client Vorrichtung, die in das ferne System (206, 400) eingesteckt ist, durch Kommunizieren von Vorrichtungszugriffsdaten an das ferne System (206, 400) über das Netzwerk (208, 316);
Abbilden der fernen Client Vorrichtung, die in das ferne System (206, 400) eingesteckt ist, als USB Vorrichtung an der lokalen Client Vorrichtung (102, 204, 304, 411);
Codieren der Vorrichtungszugriffsdaten, die an das ferne System (206, 400) über das Netzwerk (208, 316) übertragen worden sind;
Empfangen, an der lokalen Client Vorrichtung (102, 204, 304, 411), von Informationen von dem fernen System (206, 400) über das Netzwerk (208, 316), die den angeforderten Zugriff auf die ferne Client Vorrichtung, die in das ferne System (206, 400) eingesteckt ist, bestätigen;
**dadurch gekennzeichnet, dass** die Schritte umfassen:
Exportieren der empfangenen fernen Client Vorrichtungsermittlungsdaten entsprechend der fernen Client Vorrichtung, die in das ferne System (206, 400) eingesteckt ist, an ein Betriebssystem, das sich an der lokalen Client Vorrichtung (102, 204, 304, 411) befindet; und
Ermitteln der fernen Client Vorrichtung, die in das ferne System (206, 400) eingesteckt ist, an der lokalen Client Vorrichtung (102, 204, 304, 411) basierend auf dem Exportieren.

6. Maschinenlesbarer Speicher nach Anspruch 5, der des Weiteren einen Code aufweist zum Umsetzen, an der lokalen Client Vorrichtung (102, 204, 304, 411), der fernen Client Vorrichtungsermittlungsdaten entsprechend der fernen Client Vorrichtung, die in das ferne System (206, 400) eingesteckt ist, in entsprechende USB Vorrichtungsermittlungsereignisse.

7. Maschinenlesbarer Speicher nach Anspruch 5, der des Weiteren einen Code aufweist zum Repräsentieren der fernen Client Vorrichtung, die in das ferne System (206, 400) eingesteckt ist, als USB Vorrichtung an der lokalen Client Vorrichtung (102, 204, 304, 411).

8. Maschinenlesbarer Speicher nach Anspruch 5, wobei die ferne Client Vorrichtung eine ferne USB Client Vorrichtung oder eine ferne Nicht-USB Client Vorrichtung ist.

9. System zum Kommunizieren über eine Busschnittstelle für ein Netzwerk (208, 316), wobei das System eine lokale Client Vorrichtung aufweist mit:
einem Prozessor (104, 314), der so ausgelegt ist, dass er an einer lokalen Client Vorrichtung (102, 204, 304, 411) über ein Netzwerk (208, 316) ferne Client Vorrichtungs-Ermittlungsdaten entsprechend einer fernen Client Vorrichtung, die in ein fernes System (206, 400) eingesteckt ist, empfängt; wobei
der Prozessor (104, 314) so ausgelegt ist, dass er durch die lokale Client Vorrichtung (102, 204, 304, 411) Zugriff auf die ferne Client Vorrichtung, die in das ferne System (206, 400) eingesteckt ist, anfordert durch Kommunizieren von Vorrichtungszugriffsdaten an das ferne System (206, 400) über das Netzwerk (208, 316);
wobei der Prozessor (104, 314) so ausgelegt ist, das er die ferne Client Vorrichtung, die in das ferne System (206, 400) eingesteckt ist, als USB Vorrichtung an der lokalen Client Vorrichtung (102, 204, 304, 411) abbildet;
wobei der Prozessor (104, 314) so ausgelegt ist, dass er die Vorrichtungszugriffsdaten, die an das ferne System (206, 400) über das Netzwerk (208, 316) übertragen worden sind, codiert;
wobei der Prozessor (104, 314) so ausgelegt ist, dass er an der lokalen Client Vorrichtung (102, 204, 304, 411) Informationen von dem fernen System (206, 400) über das Netzwerk (208, 314) empfängt, die den angeforderten Zugriff auf die ferne Client Vorrichtung, die in das ferne System (206, 400) eingesteckt ist, bestätigen;
**dadurch gekennzeichnet, dass**
der Prozessor (104, 314) so ausgelegt ist, dass er die empfangenen fernen Client Vorrichtungsermittlungsdaten entsprechend der fernen Client Vorrichtung, die in das ferne System (206, 400) eingesteckt ist, an ein Betriebssystem, das sich an der lokalen Client Vorrichtung befindet, exportiert; und
der Prozessor (104, 314) so ausgelegt ist, dass er die ferne Client Vorrichtung, die in das ferne System (206, 400) eingesteckt ist, an der lokalen Client Vorrichtung (102, 204, 304, 411) basierend auf dem Exportieren ermittelt.

10. System nach Anspruch 9, wobei der Prozessor (104, 314) so ausgelegt ist, dass er an der lokalen Client Vorrichtung (102, 204, 304, 411) die fernen Client Vorrichtungsermittlungsdaten entsprechend der fernen Client Vorrichtung, die in das ferne System (206, 400) eingesteckt ist, in entsprechende USB Vorrichtungsermittlungsereignisse umsetzt.

11. System nach Anspruch 9, wobei der Prozessor (104, 314) so ausgelegt ist, dass er die ferne Client Vorrichtung, die in das ferne System (206, 400) eingesteckt ist, als USB Vorrichtung an der lokalen Client Vorrichtung (102, 204, 304, 411) repräsentiert.

12. System nach Anspruch 9, wobei die ferne Client Vorrichtung eine ferne USB Client Vorrichtung oder eine ferne Nicht-USB Client Vorrichtung ist.

## Revendications

1. Procédé de communication par l'intermédiaire d'une interface de bus dans un réseau (208, 316), le procédé comprenant :
la réception, au niveau d'un dispositif client local (102, 204, 304, 411) par l'intermédiaire d'un réseau (208, 316), de données de détection de dispositif client distant correspondant à un dispositif client distant qui est branché dans un système distant (206, 400) ;
la demande, par ledit dispositif client local (102, 204, 304, 411), d'un accès audit dispositif client distant qui est branché dans ledit système distant (206, 400) en communiquant des données d'accès de dispositif audit système distant (206, 400) par l'intermédiaire dudit réseau (208, 316) ;
le mappage dudit dispositif client distant qui est branché dans ledit système distant (206, 400) comme un dispositif USB au niveau dudit dispositif client local (102, 204, 304, 411) ;
l'encodage desdites données d'accès de dispositif communiquées audit système distant (206, 400) par l'intermédiaire dudit réseau (208, 316) ;
la réception, au niveau dudit dispositif client local (102, 204, 304, 411), d'une information dudit système distant (206, 400) par l'intermédiaire dudit réseau (208, 316) confirmant ledit accès demandé audit dispositif client distant qui est branché dans ledit système distant (206, 400) ; **caractérisé par**
l'exportation desdites données de détection de dispositif client distant reçues correspondant audit dispositif client distant qui est branché dans ledit système distant (206, 400) jusqu'à un système d'exploitation situé au niveau dudit dispositif client local (102, 204, 304, 411) ; et
la détection dudit dispositif client distant qui est branché dans ledit système distant (206, 400) au niveau dudit dispositif client local (102, 204, 304, 411) sur la base de ladite exportation.

2. Procédé selon la revendication 1, comprenant en outre la traduction, au niveau dudit dispositif client local (102, 204, 304, 411), desdites données de détection de dispositif client distant correspondant audit dispositif client distant qui est branché dans ledit système distant (206, 400) en événements correspondants de détection de dispositif USB.

3. Procédé selon la revendication 1, comprenant en outre la représentation dudit dispositif client distant qui est branché dans ledit système distant (206, 400) comme ledit dispositif USB au niveau dudit dispositif client local (102, 204, 304, 411).

4. Procédé selon la revendication 1, dans lequel ledit dispositif client distant est un dispositif client USB distant ou un dispositif client non USB distant.

5. Stockage lisible par une machine ayant, stocké sur celui-ci, un programme informatique ayant au moins une section de code pour communiquer par l'intermédiaire d'une interface de bus dans un réseau (208, 316), l'au moins une section de code étant exécutable par un dispositif client local (102, 204, 304, 411) pour faire en sorte que le dispositif client local (102, 204, 304, 411) mette en oeuvre des étapes comprenant :
la réception, au niveau d'un dispositif client local (102, 204, 304, 411) par l'intermédiaire d'un réseau (208, 316), de données de détection de dispositif client distant correspondant à un dispositif client distant qui est branché dans un système distant (206, 400) ;
la demande, par ledit dispositif client local (102, 204, 304, 411), d'un accès audit dispositif client distant qui est branché dans ledit système distant (206, 400) en communiquant des données d'accès de dispositif audit système distant (206, 400) par l'intermédiaire dudit réseau (208, 316) ;
le mappage dudit dispositif client distant qui est branché dans ledit système distant (206, 400) comme un dispositif USB au niveau dudit dispositif client local (102, 204, 304, 411) ;
l'encodage desdites données d'accès de dispositif communiquées audit système distant (206, 400) par l'intermédiaire dudit réseau (208, 316) ;
la réception, au niveau dudit dispositif client local (102, 204, 304, 411), d'une information dudit système distant (206, 400) par l'intermédiaire dudit réseau (208, 316) confirmant ledit accès demandé audit dispositif client distant qui est branché dans ledit système distant (206, 400) ;
**caractérisé en ce que** les étapes comprennent
l'exportation desdites données de détection de dispositif client distant reçues correspondant audit dispositif client distant qui est branché dans ledit système distant (206, 400) jusqu'à un système d'exploitation situé au niveau dudit dispositif client local (102, 204, 304, 411) ; et
la détection dudit dispositif client distant qui est branché dans ledit système distant (206, 400) au niveau dudit dispositif client local (102, 204, 304, 411) sur la base de ladite exportation.

6. Stockage lisible par une machine selon la revendication 5, comprenant en outre un code pour traduire, au niveau dudit dispositif client local (102, 204, 304, 411), lesdites données de détection de dispositif client distant correspondant audit dispositif client distant qui est branché dans ledit système distant (206, 400) en événements correspondants de détection de dispositif USB.

7. Stockage lisible par une machine selon la revendication 5, comprenant en outre un code pour représenter ledit dispositif client distant qui est branché dans ledit système distant (206, 400) comme ledit dispositif USB au niveau dudit dispositif client local (102, 204, 304, 411).

8. Stockage lisible par une machine selon la revendication 5, dans lequel ledit dispositif client distant est un dispositif client USB distant ou un dispositif client non USB distant.

9. Système pour communiquer par l'intermédiaire d'une interface de bus pour un réseau (208, 316), le système comprenant un dispositif client local ayant :
un processeur (104, 314) adapté à recevoir, au niveau d'un dispositif client local (102, 204, 304, 411) par l'intermédiaire d'un réseau (208, 316), des données de détection de dispositif client distant correspondant à un dispositif client distant (110, 212, 306, 412) qui est branché dans un système distant (206, 400) ; dans lequel
ledit processeur (104, 314) est adapté à demander, par ledit dispositif client local (102, 204, 304, 411), un accès audit dispositif client distant qui est branché dans ledit système distant (206, 400) en communiquant des données d'accès de dispositif audit système distant (206, 400) par l'intermédiaire dudit réseau (208, 316) ;
ledit processeur (104, 314) est adapté à mapper ledit dispositif client distant qui est branché dans ledit système distant (206, 400) comme un dispositif USB au niveau dudit dispositif client local (102, 204, 304, 411) ;
ledit processeur (104, 314) est adapté à encoder lesdites données d'accès de dispositif communiquées audit système distant (206, 400) par l'intermédiaire dudit réseau (208, 316) ;
ledit processeur (104, 314) est adapté à recevoir, au niveau dudit dispositif client local (102, 204, 304, 411), une information dudit système distant (206, 400) par l'intermédiaire dudit réseau (208, 316) confirmant ledit accès demandé audit dispositif client distant qui est branché dans ledit système distant (206, 400) ; **caractérisé en ce que**
ledit processeur (104, 314) est adapté à exporter lesdites données de détection de dispositif client distant reçues correspondant audit dispositif client distant qui est branché dans ledit système distant (206, 400) jusqu'à un système d'exploitation situé au niveau dudit dispositif client local ; et
ledit processeur (104, 314) est adapté à détecter ledit dispositif client distant qui est branché dans ledit système distant (206, 400) au niveau dudit dispositif client local (102, 204, 304, 411) sur la base de ladite exportation.

10. Système selon la revendication 9, dans lequel ledit processeur (104, 314) est adapté à traduire, au niveau dudit dispositif client local (102, 204, 304, 411), lesdites données de détection de dispositif client distant correspondant audit dispositif client distant qui est branché dans ledit système distant (206, 400) en événements correspondants de détection de dispositif USB.

11. Système selon la revendication 9, dans lequel ledit processeur (104, 314) est adapté à représenter ledit dispositif client distant qui est branché dans ledit système distant (206, 400) comme ledit dispositif USB au niveau dudit dispositif client local (102, 204, 304, 411).

12. Système selon la revendication 9, dans lequel ledit dispositif client distant est un dispositif client USB distant ou un dispositif client non USB distant.
